# EUROPÄISCHE PATENTSCHRIFT

(11) **EP 3 314 138 B1**
(45) Veröffentlichungstag und Bekanntmachung des Hinweises auf die Patenterteilung: **02.09.2020**
(21) Anmeldenummer: 16729181.4
(22) Anmeldetag: 12.05.2016
(51) Int. Cl.: F16D 13/58, F16D 13/71, F16D 13/70

(54) **ANTRIEBSSTRANG FÜR EIN KRAFTFAHRZEUG MIT EINER REIBUNGSKUPPLUNG UND REIBUNGSKUPPLUNG FÜR EINEN ANTRIEBSSTRANG EINES KRAFTFAHRZEUGS**
POWERTRAIN FOR A MOTOR VEHICLE COMPRISING A FRICTION CLUTCH AND FRICTION CLUTCH FOR A POWERTRAIN OF A MOTOR VEHICLE
CHAÎNE CINÉMATIQUE DE VÉHICULE AUTOMOBILE MUNIE D'UN EMBRAYAGE À FRICTION ET EMBRAYAGE À FRICTION DESTINÉ À UNE CHAÎNE CINÉMATIQUE DE VÉHICULE AUTOMOBILE

(30) Priorität: 24.06.2015 DE 102015211636
(43) Veröffentlichungstag der Anmeldung: 02.05.2018
(73) Patentinhaber: Schaeffler Technologies AG & Co. KG, 91074 Herzogenaurach (DE)
(72) Erfinder: RABER, Christoph, 66564 Ottweiler-Steinbach (DE); FINKENZELLER, Marc, 77723 Gengenbach (DE)
(86) Internationale Anmeldenummer: PCT/DE2016/200225
(87) Internationale Veröffentlichungsnummer: WO 2016/206679

(56) Entgegenhaltungen:
- EP-A2- 0 125 377
- DE-A1-102012 223 998

## Beschreibung

Die vorliegende Erfindung betrifft einen Antriebsstrang für ein Kraftfahrzeug mit zumindest einem Verbrennungsmotor, der ausgebildet ist, eine Motorwelle in einer einzigen Drehrichtung anzutreiben, und einer Reibungskupplung gemäß dem Oberbegriff des Patentanspruchs 1. Aus der DE 37 42 056 A1 ist eine Reibungskupplung für einen Antriebsstrang eines Kraftfahrzeugs bekannt, die ein Kupplungsgehäuse, eine Gegendruckplatte und eine Anpressplatte aufweist. Die Anpressplatte ist bezüglich der Gegendruckplatte und des Kupplungsgehäuses in axialer Richtung der Reibungskupplung begrenzt verlagerbar und mittels in Umfangsrichtung der Reibungskupplung verteilt angeordneter, eine Ausrückkraftkomponente aufbringender Blattfedern am Kupplungsgehäuse drehfest angebunden. Ferner weist die Reibungskupplung eine Kupplungsscheibe auf, die im eingerückten Zustand der Reibungskupplung reibschlüssig zwischen der Gegendruckplatte und der Anpressplatte, auf die zusätzlich eine durch eine als Tellerfeder ausgebildete Betätigungseinrichtung aufgebrachte Einrückkraftkomponente wirkt, geklemmt ist.

Andere gattungsgemäße Reibungskupplungen sind aus den Druckschriften DE 10 2012 223 998 A1 und EP 0 125 377 A2 bekannt.

Es ist Aufgabe der vorliegenden Erfindung, einen Antriebsstrang für ein Kraftfahrzeug mit einer Reibungskupplung und eine Reibungskupplung für einen Antriebsstrang eines Kraftfahrzeugs anzugeben, die es ermöglichen, ein höheres Drehmoment zu übertragen. Erfindungsgemäß gelöst wird diese Aufgabe durch einen Antriebsstrang für ein Kraftfahrzeug gemäß Patentanspruch 1, mit zumindest einem Verbrennungsmotor, der ausgebildet ist, eine Motorwelle in einer einzigen Drehrichtung anzutreiben, und einer Reibungskupplung, deren Eingangsseite mittelbar oder unmittelbar mit der Motorwelle verbunden ist, und deren Ausgangsseite mittelbar oder unmittelbar mit einer Eingangswelle eines Getriebes verbunden ist, wobei die Eingangsseite der Reibungskupplung zumindest ein Kupplungsgehäuse, eine Gegendruckplatte und eine Anpressplatte, die bezüglich zumindest der Gegendruckplatte in axialer Richtung der Reibungskupplung begrenzt verlagerbar ist, und die mittels in Umfangsrichtung der Reibungskupplung verteilt angeordneter, eine Ausrückkraftkomponente aufbringender Blattfedern an der Gegendruckplatte drehfest angebunden ist, und wobei die Ausgangsseite der Reibungskupplung zumindest eine Kupplungsscheibe aufweist, die im eingerückten Zustand der Reibungskupplung reibschlüssig zwischen der Gegendruckplatte und der Anpressplatte, auf die zusätzlich eine durch eine Betätigungseinrichtung aufgebrachte Einrücckraftkomponente wirkt, geklemmt ist, wobei die Blattfedern derart zwischen dem Kupplungsgehäuse und der Anpressplatte und/oder zwischen der Gegendruckplatte und der Anpressplatte angeordnet sind, dass sie im eingerückten Zustand in Drehrichtung der antreibenden Motorwelle eine weitere Einrückkraftkomponente erzeugen, durch die die auf die Anpressplatte in axialer Richtung der Reibungskupplung wirkende Ausrückkraftkomponente verringert wird.

Somit kann das durch die Reibungskupplung übertragbare Drehmoment erhöht werden, da die Blattfedern im Momentenfluss des Antriebsstrangs bzw. der Reibungskupplung angeordnet sind, d.h. sobald die Anpressplatte mit einem anpressplattenseitigen Reibbelag der Kupplungsscheibe in Anlage kommt, im Zugbetrieb des Verbrennungsmotors eine zusätzliche Einrückkraftkomponente erzeugen, durch die die Anpresskraft der Anpressplatte erhöht wird. Um dabei ein Ausknicken der Blattfedern zu verhindern, können verschiedene Maßnahmen alleine oder in Kombination vorgesehen werden. Beispielsweise kann die Dicke der Blattfedern erhöht werden. Ebenso ist es möglich, die Anzahl der Blattfedern pro Blattfederpaket zu erhöhen. Ferner können die gefährdeten Stellen durch Sicken, Materialausstülpungen oder Materialeinzüge verstärkt werden. Weiterhin ist es möglich, die anpressplattenseitige Vernietung der Blattfedern zu nutzen, um ein Ausknicken der Blattfedern zu verhindern, beispielsweise indem der entsprechende Setz- oder Nietkopf in Anlage mit einer kupplungsgehäuseseitigen Durchbrechung oder Aussparung kommen kann. Auch können aufseiten der Anpressplatte bzw. der Anpressplattenlappen, an denen die Blattfedern vernietet sind, entsprechende kupplungsgehäuseseitige Abstützungen, beispielsweise mittels zusätzlicher Blattfedern oder dergleichen, vorgesehen sein.

Bevorzugte Ausführungsbeispiele der vorliegenden Erfindung sind in den abhängigen Patentansprüchen dargelegt.

Insbesondere ist es von Vorteil, wenn die Blattfedern, in Blickrichtung von der Gegendruckplatte zur Anpressplatte der Reibungskupplung betrachtet, in Drehrichtung der Motorwelle abfallend geneigt sind, wobei zumindest im eingerückten Zustand der Reibungskupplung ein Befestigungspunkt einer der Blattfedern am Kupplungsgehäuse in axialer Richtung der Reibungskupplung weiter von der Gegendruckplatte entfernt ist als ein in Drehrichtung der Motorwelle nachfolgender Befestigungspunkt derselben Blattfeder an der Anpressplatte. Alternativ oder zusätzlich ist zumindest im eingerückten Zustand der Reibungskupplung ein Befestigungspunkt einer der Blattfedern an der Anpressplatte in axialer Richtung der Reibungskupplung weiter von der Gegendruckplatte entfernt als ein in Drehrichtung der Motorwelle nachfolgender Befestigungspunkt derselben Blattfeder an der Gegendruckplatte. Damit sind, wenn die im Antriebsstrang vorgesehene Reibkupplung derart orientiert ist, dass bezogen auf das Schwerefeld der Erde die Gegendruckplatte unten ist, die Kupplungsscheibe darüber angeordnet ist und die Anpressplatte darüber angeordnet ist, die Blattfedern zwischen dem Kupplungsgehäuse und der Anpressplatte und/oder zwischen der Gegendruckplatte und der Anpressplatte, in Blickrichtung von einem Außenbereich der Reibungskupplung zur Drehachse der Reibungskupplung betrachtet, von links oben nach rechts unten abfallend angeordnet. Somit werden die Blattfedern bei der Übertragung von Zugmomenten auf Schub bzw. Knickung belastet und wirken anpresskraftverstärkend. Diese Anordnung hat den Vorteil, dass die im Verschleißzustand der Reibungskupplung geringer werdende Wirkanpresskraft durch die Zunahme der Blattfederkraft aufgrund des größer werdenden Aufstellwinkels der Blattfedern kompensiert wird.

Gemäß einem bevorzugten Ausführungsbeispiel weist der Verbrennungsmotor eine Vorderseite und eine Rückseite, die näher an der Reibungskupplung angeordnet ist, auf. Die Motorwelle ist, in Blickrichtung von der Vorderseite zur Rückseite des Verbrennungsmotors betrachtet, rechtsdrehend, d.h. dreht sich im Uhrzeigersinn.

Vorzugsweise sind die in Umfangsrichtung der Reibungskupplung verteilt angeordneten Blattfedern paketweise ausgebildet.

Gemäß einem weiteren bevorzugten Ausführungsbeispiel ist die Reibungskupplung als trockene Tellerfederkupplung ausgebildet.

Es ist vor Vorteil, wenn die Reibungskupplung derart orientiert ist, dass die Gegendruckplatte unten ist, die Kupplungsscheibe darüber angeordnet ist und die Anpressplatte darüber angeordnet ist, die Blattfedern zwischen der Gegendruckplatte und der Anpressplatte, in Blickrichtung von einem Außenbereich der Reibungskupplung zur Drehachse der Reibungskupplung betrachtet, von links oben nach rechts unten abfallend angeordnet sind.

Wenn die Blattfedern zwischen der Anpressplatte und der Gegendruckplatte angeordnet sind, ist jede der Blattfedern zwischen der Gegendruckplatte und der Anpressplatte, in Blickrichtung von einem Außenbereich der Reibungskupplung zur Drehachse der Reibungskupplung betrachtet, zumindest im eingerückten Zustand der Reibungskupplung links oben an der Anpressplatte und rechts unten an der Gegendruckplatte befestigt und von links oben nach rechts unten abfallend angeordnet. Somit werden die Blattfedern bei der Übertragung von Zugmomenten auf Schub bzw. Knickung belastet und wirken anpresskraftverstärkend. Diese Anordnung hat den Vorteil, dass die im Verschleißzustand der Reibungskupplung geringer werdende Wirkanpresskraft durch die Zunahme der Blattfederkraft aufgrund des größer werdenden Aufstellwinkels der Blattfedern kompensiert wird.

Die Reibungskupplung ist insbesondere in dem zuvor beschriebenen Antriebsstrang für ein Kraftfahrzeug vorgesehen. Vorzugsweise ist die Reibungskupplung als trockene Reibungskupplung ausgebildet, d.h. die Kupplungsscheibe der Reibungskupplung ist trockenlaufend. Die Reibungskupplung kann einerseits als normal-eingerückte Reibungskupplung, vorzugsweise als Tellerfederkupplung, und andererseits als normal-ausgerückte Reibungskupplung, vorzugsweise als Hebelfederkupplung, ausgebildet sein. Die Betätigung der Reibungskupplung durch die Betätigungseinrichtung kann drückend oder ziehend erfolgen. Die Reibungskupplung kann ohne Verschleißnachstellung oder mit einer kraftbasierten Verschleißnachstellung, beispielsweise mit einer Sensorfeder nach dem Prinzip der SAC oder LAC, oder mit einer wegbasierten Verschleißnachstelleinrichtung, beispielsweise mit einem Spindeltrieb nach dem Prinzip der TAC, ausgestattet sein.

Weiterhin vorzugsweise weist die Kupplungsscheibe zumindest einen gegendruckplattenseitigen Reibbelag und zumindest einen anpressplattenseitigen Reibbelag auf, wobei die beiden Reibbeläge unterschiedliche Reibwerte aufweisen.

Insbesondere ist es von Vorteil, wenn der anpressplattenseitige Reibbelag einen höheren Reibwert als der gegendruckplattenseitige Reibbelag aufweist. Hierdurch ist es möglich, die Neigungswinkel der Blattfedern gering zu halten, was die Gefahr des Ausknickens der Blattfedern verringert, und gleichzeitig trotzdem das durch die Reibungskupplung übertragbare Drehmoment aufgrund der im Momentenfluss angeordneten Blattfedern zu steigern.

Die vorliegende Erfindung wird nachfolgend anhand von bevorzugten Ausführungsbeispielen in Verbindung mit den zugehörigen Figuren näher erläutert.

In diesen zeigen:
- Figur 1: eine schematische Darstellung eines Ausführungsbeispiels eines Antriebsstrangs für ein Kraftfahrzeug mit einer Reibungskupplung,
- Figur 2: eine schematische Darstellung eines nicht erfindungsgemäßen Ausführungsbeispiels der Reibungskupplung für den Antriebsstrang eines Kraftfahrzeugs gemäß Figur 1,
- Figur 3: eine perspektivische Darstellung der Reibungskupplung gemäß Figur 2 vonseiten des Kupplungsdeckels betrachtet und
- Figur 4: eine perspektivische Darstellung der Reibungskupplung gemäß Figur 2 vonseiten der Anpressplatte aus betrachtet.

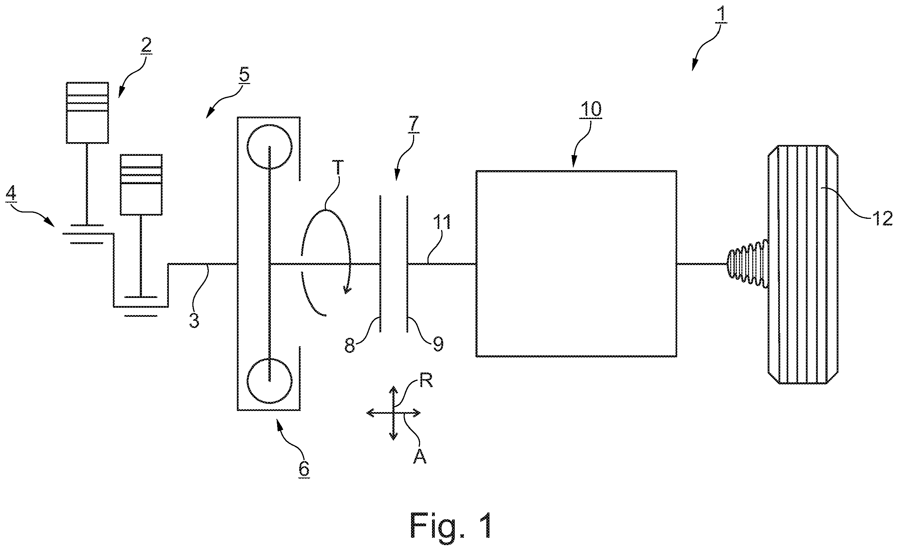

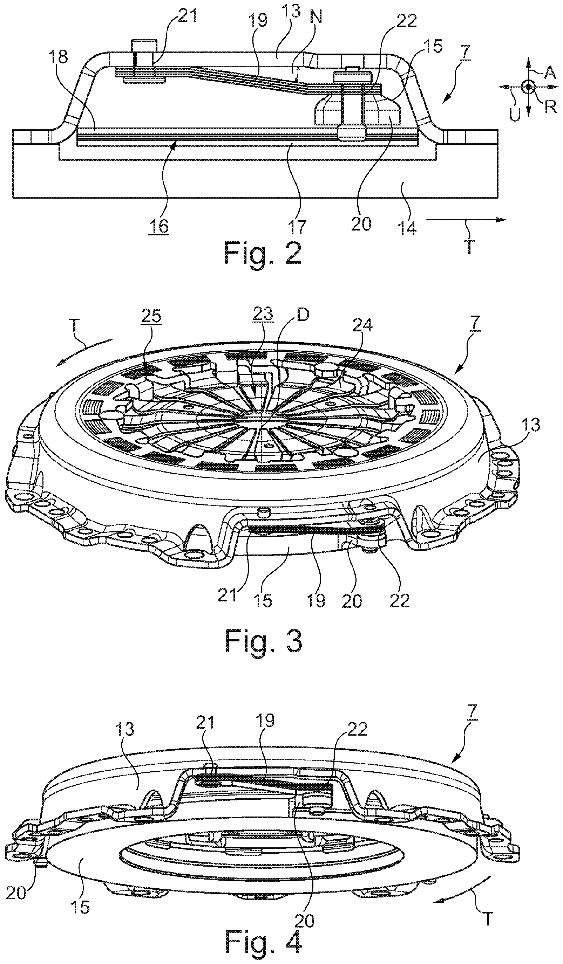

Die Figur 1 betrifft ein bevorzugtes Ausführungsbeispiel eines Antriebsstrangs 1 für ein Kraftfahrzeug mit einer Reibungskupplung 7. Merkmale, die in der vorliegenden Beschreibung nicht als erfindungswesentlich gekennzeichnet sind, sind als optional zu verstehen. Daher betrifft die nachfolgende Beschreibung auch weitere Ausführungsbeispiele des Antriebsstrangs 1 mit der Reibungskupplung 7, die Teilkombinationen der im Folgenden zu erläuternden Merkmale aufweisen. In den Figuren 2 bis 4 ist eine Reibungskupplung 7 dargestellt, die in dem besagten Antriebsstrang 1 wahlweise zum Einsatz kommen kann, in der dargestellten Variante aber nicht auf den Patentanspruchs 1 lesbar ist.

Der in Figur 1 schematisch dargestellte Antriebsstrang 1 weist einen Verbrennungsmotor 2 auf. Der Verbrennungsmotor 2 ist vorzugsweise als Hubkolbenmotor ausgebildet und weist eine drehbar gelagerte, durch die Hubkolben angetriebene Motorwelle 3 auf, die sich von einer Vorderseite 4 des Verbrennungsmotors 2 zu einer Rückseite 5 des Verbrennungsmotors 2 erstreckt. Die Motorwelle 3 des Verbrennungsmotors 2 ist, in Blickrichtung von der Vorderseite 4 zur Rückseite 5 des Verbrennungsmotors 2 betrachtet, rechtsdrehend, d.h. dreht sich im Uhrzeigersinn.

Im dargestellten Ausführungsbeispiel ist die Motorwelle 3 mit einem Torsionsschwingungsdämpfer 6 verbunden, der ausgebildet ist, die Drehungleichförmigkeiten der Motorwelle 3, die durch die Zündreihenfolge des Verbrennungsmotors 2 entstehen, zu dämpfen. Der Torsionsschwingungsdämpfer 7 ist mit einer Eingangsseite 8 der Reibungskupplung 7 verbunden. Eine Ausgangsseite 9 der Reibungskupplung 7 ist mit einer Eingangswelle 11 eines Getriebes 10 verbunden. Die Reibungskupplung 7 ist als Anfahrkupplung ausgebildet und trennt im ausgerückten Zustand die Eingangsseite 8 von der Ausgangsseite 9 bzw. verbindet im eingerückten Zustand die Eingangsseite 8 mit der Ausgangsseite 9. Vorzugsweise ist die Reibungskupplung 7 als trockene Tellerfederkupplung ausgebildet. Das Getriebe 10 ist mit mindestens einem Rad 12 verbunden, um die Antriebsleistung des Verbrennungsmotors 2 auf die Fahrbahn zu übertragen.

Es ist offensichtlich, dass die Darstellung in Figur 1 nur schematischer Natur ist, da bei einem vierrädrigen Kraftfahrzeug die Antriebsleistung des Verbrennungsmotors 2 nicht über ein einzelnes Rad 12 auf die Fahrbahn übertragen wird, sondern üblicherweise noch zumindest ein Differenzial zwischen dem Getriebe 10 und der Antriebsachse bzw. den Rädern 12 der Antriebsachse dazwischen geschaltet ist. Ebenso ist es möglich, dass die Eingangsseite 8 der Reibungskupplung 7 nicht mittelbar über den Torsionsschwingungsdämpfer 6 mit der Motorwelle 3 des Verbrennungsmotors 2 verbunden ist, sondern dass die Eingangsseite 8 unmittelbar mit der Motorwelle 3 des Verbrennungsmotors 2 verbunden ist. Weiterhin ist es möglich, dass die Ausgangsseite 9 der Reibungskupplung 7 nicht unmittelbar mit der Eingangswelle 11 des Getriebes 10 verbunden ist, sondern mittelbar über eine weitere Komponente, beispielsweise ein Hybridmodul, mit der Eingangswelle 11 des Getriebes 10 verbunden ist.

Die Eingangsseite 8 der Reibungskupplung 7 weist eine Gegendruckplatte 14 auf, die mit der Motorwelle 3 des Verbrennungsmotors 2 mittelbar oder unmittelbar verbunden ist. Die Gegendruckplatte 14 kann als Schwungmasse eines Einmassenschwungrads oder als Sekundärschwungmasse eines Zweimassenschwungrads ausgebildet sein.

Ein Kupplungsgehäuse 13 der Reibungskupplung 7, das ebenfalls der Eingangsseite 8 der Reibungskupplung 7 zuzuordnen ist, ist drehfest mit der Gegendruckplatte 14 der Reibungskupplung 7 verbunden. Hierzu weist das Kupplungsgehäuse 13 beispielsweise in seinem Außenumfang einen Gehäuseflansch auf, der mit mehreren, in Umfangsrichtung U der Reibungskupplung 7 verteilt angeordneten Bolzenlöchern versehen ist. Über die Bolzenlöcher ist das Kupplungsgehäuse 13 mittels entsprechender Bolzen fest mit der Gegendruckplatte 14 verschraubt. Das Kupplungsgehäuse 13 ist ausgebildet, innen liegende Bauteile der Reibungskupplung 7 vor Umwelteinflüssen, beispielsweise Spritzwasser, Schmierstoffen und extremer Verschmutzung, zu schützen.

Ebenfalls zur Eingangsseite 8 der Reibungskupplung 7 gehört eine Anpressplatte 15, die bezüglich zumindest der Gegendruckplatte 14, und im dargestellten Ausführungsbeispiel auch bezüglich des Kupplungsgehäuses 13, in axialer Richtung A der Reibungskupplung 7 begrenzt verlagerbar ist. Hierzu ist die Anpressplatte 15 mittels mehrerer, in Umfangsrichtung U der Reibungskupplung 7 verteilt angeordneter Blattfedern 19 drehfest am Kupplungsgehäuse 13 angebunden. Alternativ oder zusätzlich kann die Anpressplatte 15 über die Blattfedern 19 auch drehfest an der Gegendruckplatte 14 der Reibungskupplung 7 angebunden sein.

Eine Drehachse D der Reibungskupplung 7 erstreckt sich in axialer Richtung A der Reibungskupplung 7. Eine Kupplungsscheibe 16 ist in axialer Richtung A der Reibungskupplung 7 zwischen der Gegendruckplatte 14 und der Anpressplatte 15 angeordnet. Die Kupplungsscheibe 16 ist der Ausgangsseite 9 der Reibungskupplung 7 zugeordnet und drehfest mit der Eingangswelle 11 des Getriebes 10 verbunden. Im eingerückten Zustand der Reibungskupplung 7 ist die Kupplungsscheibe 16 reibschlüssig zwischen der Gegendruckplatte 14 und der Anpressplatte 15 geklemmt. Im teilweise eingerückten Zustand der Reibungskupplung 7 schleift die Reibungskupplung 7, d.h. Schlupf liegt zwischen der Eingangsseite 8 und der Ausgangsseite 9 bzw. zwischen der Gegendruckplatte 14 und der Anpressplatte 15 einerseits und der dazwischen angeordneten Kupplungsscheibe 16 andererseits vor. Im ausgerückten Zustand der Reibungskupplung 7 ist die Kupplungsscheibe 16 reibfrei zwischen der Gegendruckplatte 14 und der Anpressplatte 15 angeordnet, die ihrerseits in diesem Zustand bezüglich der Drehachse D kein Drehmoment auf die Kupplungsscheibe 16 übertragen können.

Die in Umfangsrichtung U der Reibungskupplung 7 verteilt angeordneten Blattfedern 19 bringen eine Ausrückkraftkomponente auf die Anpressplatte 15 auf, d.h. ziehen im Falle von kupplungsgehäuseseitig befestigten Blattfedern 19 bzw. drücken im Falle von gegendruckplattenseitig befestigten Blattfedern 19 die Anpressplatte 15 von der Gegendruckplatte 14 weg, um den Reibschluss zwischen der Anpressplatte 15 und einem anpressplattenseitigen Reibbelag 18 der Kupplungsscheibe 16 sowie zwischen der Gegendruckplatte 14 und einem gegendruckplattenseitigen Reibbelag 17 der Kupplungsscheibe 16 aufzuheben.

Zur Befestigung der Blattfedern 19 ist die Anpressplatte 15 mit in Umfangsrichtung U der Reibungskupplung 7 verteilt angeordneten Anpressplattenlappen 20 ausgestattet, die sich in radialer Richtung R der Reibungskupplung 7 nach außen erstrecken. Jede der in Umfangsrichtung U der Reibungskupplung 7 verteilt angeordneten Blattfedern 19 ist im dargestellten Ausführungsbeispiel in einem ersten Befestigungspunkt 21 am Kupplungsgehäuse 13 befestigt, insbesondere vernietet. In einem zweiten Befestigungspunkt 22 ist die jeweilige Blattfeder 19 am entsprechenden Anpressplattenlappen 20 befestigt, insbesondere vernietet. Die entsprechenden Blattfedern 19 können paketweise ausgebildet sein, d.h. mehrere in axialer Richtung A der Reibungskupplung 7 übereinander angeordnete Blattfedern 19 können als Paket im ersten Befestigungspunkt 21 mit dem Kupplungsgehäuse 13 und im zweiten Befestigungspunkt 22 mit der Anpressplatte 15 verbunden sein.

Der durch die Blattfedern 19 auf die Anpressplatte 15 aufgebrachte Ausrückkraftkomponente ist in axialer Richtung A der Reibungskupplung 7 eine Einrückkraftkomponente entgegen gerichtet, die durch eine Betätigungseinrichtung 23 der Reibungskupplung 7 aufgebracht wird. Gemäß der in den Figuren 2 bis 4 dargestellten Reibungskupplung 7 weist die Betätigungseinrichtung 23 eine Tellerfeder 24 auf, die mittels einer Schwenklagerung 25 verkippbar am Kupplungsgehäuse 13 gelagert ist. Beispielsweise ist hierzu das Kupplungsgehäuse 13 mit entsprechenden Sicken ausgestattet, über die die Verkippung der Tellerfeder 24 erfolgen kann. Anstelle der kupplungsgehäuseseitigen Sicken ist beispielsweise auch ein Drahtring als separates Bauteil möglich. Auf der der Anpressplatte 15 zugewandten Seite der Tellerfeder 24 kann die Schwenklagerung 25 gleichermaßen durch einen Drahtring und entsprechende Tellerfederzentrierbolzen, die mit dem Kupplungsdeckel fest verbunden, insbesondere vernietet, sind oder durch kupplungsdeckelseitige Haken ausgebildet sein.

Im dargestellten Ausführungsbeispiel ist die Reibungskupplung 7 als normal-eingerückte Reibungskupplung 7 ausgebildet, d.h. als Reibungskupplung 7, bei der im unbetätigten Zustand die durch die Tellerfeder 24 aufgebrachte Einrückkraftkomponente, die durch die Blattfedern 19 aufgebrachte Ausrückkraftkomponente überwiegt, sodass im unbetätigten Zustand die Kupplungsscheibe 16 reibschlüssig zwischen der Gegendruckplatte 14 und der Anpressplatte 15 geklemmt ist. Wenn eine nicht dargestellte Ausrückeinrichtung auf die in radialer Richtung R der Reibungskupplung 7 innen angeordneten, freien Enden der Tellerfeder 24 einwirkt, wird die über die Schwenklagerung 25 verschwenkbar am Kupplungsgehäuse 13 gelagerte Tellerfeder 24 verkippt, wobei die Einrückkraftkomponente der Tellerfeder 24 verringert wird. Wenn die Einrückkraftkomponente der Tellerfeder 24 bzw. der Betätigungseinrichtung 23 geringer ist als die Ausdrückkraftkomponente der Blattfedern 19, wird die Reibungskupplung 7 ausgerückt, d.h. der Reibschluss zwischen dem gegendruckplattenseitigen Reibbelag 17 der Kupplungsscheibe 16 und der Gegendruckplatte 14 sowie zwischen dem anpressplattenseitigen Reibbelag 18 der Kupplungsscheibe 16 und der Anpressplatte 15 wird aufgehoben.

Obwohl dies nicht dargestellt ist, ist es jedoch auch möglich, dass die Reibungskupplung 7 als normal-ausgerückte Reibungskupplung 7 ausgebildet ist, bei der im nicht bestätigten Zustand die Ausrückkraftkomponente der Blattfedern 19 die Einrückkraftkomponente einer üblicherweise eine Hebelfeder aufweisenden Betätigungseinrichtung 23 überwiegt, und ein Einrücksystem durch Verschwenken der Hebelfeder die Reibungskupplung 7 einrückt, um den Reibschluss zwischen der Gegendruckplatte 14 und der Anpressplatte 15 einerseits und der Kupplungsscheibe 16 andererseits herzustellen.

Die Blattfedern 19 sind derart zwischen dem Kupplungsgehäuse und der Anpressplatte angeordnet, dass sie im eingerückten Zustand in Drehrichtung T der antreibenden Motorwelle 3 eine weitere Einrückkraftkomponente erzeugen, durch die die auf die Anpressplatte 15 in axialer Richtung A der Reibungskupplung 7 wirkende Ausrückkraftkomponente verringert wird. Erfindungsgemäß und im Unterschied zu den Figuren 2 bis 4 sind die Blattfedern derart zwischen der Gegendruckplatte 14 und der Anpressplatte 15 angeordnet, dass sie im eingerückten Zustand in Drehrichtung T der antreibenden Motorwelle 3 eine weitere Einrückkraftkomponente erzeugen, durch die die auf die Anpressplatte 15 in axialer Richtung A der Reibungskupplung 7 wirkende Ausrückkraftkomponente verringert wird.

Die Blattfedern 19 sind, in Blickrichtung von der Gegendruckplatte 14 zur Anpressplatte 15 der Reibungskupplung 7 betrachtet, in Drehrichtung T der Motorwelle 3 abfallend geneigt, wobei zumindest im eingerückten Zustand der Reibungskupplung der Befestigungspunkt 21 einer der Blattfedern 19 am Kupplungsgehäuse 13 in axialer Richtung A der Reibungskupplung 7 weiter von der Gegendruckplatte 14 entfernt ist als der in Drehrichtung T der Motorwelle 3 nachfolgende Befestigungspunkt 22 derselben Blattfeder 19 an der Anpressplatte 15. Erfindugsgemäß ist gemäß einem nicht dargestellten Ausführungsbeispiel zumindest im eingerückten Zustand der Reibungskupplung 7 der Befestigungspunkt 21 einer der Blattfedern 19 an der Anpressplatte 15 in axialer Richtung A der Reibungskupplung 7 weiter von der Gegendruckplatte 14 entfernt als der in Drehrichtung T der Motorwelle 3 nachfolgende Befestigungspunkt 22 derselben Blattfeder 19 an der Gegendruckplatte 14.

Wenn die Reibungskupplung 7 derart orientiert ist, dass bezüglich des Schwerefelds der Erde die Gegendruckplatte 14 unten ist, die Kupplungsscheibe 16 darüber angeordnet ist und die Anpressplatte 15 darüber angeordnet ist, sind die Blattfedern zwischen dem Kupplungsgehäuse 13 und der Anpressplatte 15 und/oder zwischen der Gegendruckplatte 14 und der Anpressplatte 15, in Blickrichtung von einem Außenbereich der Reibungskupplung 7 zur Drehachse D der Reibungskupplung 7 betrachtet, d.h. in radialer Richtung R der Reibungskupplung 7 nach innen betrachtet, von links oben nach rechts unten abfallend angeordnet. Der Neigungswinkel N, den die Blattfedern mit einer Kante des Kupplungsgehäuses 13 bzw. zur Anpressplatte 15 einschließen, sollte im eingerückten Zustand der Kupplung dennoch möglichst gering sein, um ein Ausknicken der Blattfedern aufgrund von plötzlich auftretenden Drehmomentspitzen beim Einkuppeln zu verhindern, da die Blattfedern 19 im Momentenfluss der Reibungskupplung 7 angeordnet sind. Um dennoch die durch die Neigung und Ausrichtung im Momentenfluss der Reibungskupplung 7 beim Einrücken erzeugte weitere Einrücckraftkomponente möglichst zu vergrößern, ist es von Vorteil, wenn der gegendruckplattenseitige Reibbelag 17 und der anpressplattenseitige Reibbelag 18 unterschiedliche Reibwerte aufweisen, wobei insbesondere der anpressplattenseitige Reibbelag 18 einen höheren Reibwert als der gegendruckplattenseitige Reibbelag 17 aufweisen sollte.

Die vorangegangenen Ausführungsbeispiele betreffen einen Antriebsstrang 1 für ein Kraftfahrzeug, mit zumindest einem Verbrennungsmotor 2, der ausgebildet ist, eine Motorwelle 3 in einer einzigen Drehrichtung T anzutreiben, und einer Reibungskupplung 7, deren Eingangsseite 8 mittelbar oder unmittelbar mit der Motorwelle 3 verbunden ist, und deren Ausgangsseite 9 mittelbar oder unmittelbar mit einer Eingangswelle 11 eines Getriebes 10 verbunden ist, wobei die Eingangsseite 8 der Reibungskupplung 7 zumindest ein Kupplungsgehäuse 13, eine Gegendruckplatte 14 und eine Anpressplatte 15, die bezüglich zumindest der Gegendruckplatte 14 in axialer Richtung A der Reibungskupplung 7 begrenzt verlagerbar ist, und die mittels in Umfangsrichtung U der Reibungskupplung 7 verteilt angeordneter, eine Ausrücckraftkomponente aufbringender Blattfedern 19 am Kupplungsgehäuse 13 und/oder an der Gegendruckplatte 14 drehfest angebunden ist, und wobei die Ausgangsseite 9 der Reibungskupplung 7 zumindest eine Kupplungsscheibe 16 aufweist, die im eingerückten Zustand der Reibungskupplung 7 reibschlüssig zwischen der Gegendruckplatte 14 und der Anpressplatte 15, auf die zusätzlich eine durch die Betätigungseinrichtung 23 aufgebrachte Einrückkraftkomponente wirkt, geklemmt ist, wobei die Blattfedern 19 derart zwischen dem Kupplungsgehäuse 13 und der Anpressplatte 15 und/oder zwischen der Gegendruckplatte 14 und der Anpressplatte 15 angeordnet sind, dass sie im eingerückten Zustand in Drehrichtung T der antreibenden Motorwelle 3 eine weitere Einrückkraftkomponente erzeugen, durch die die auf die Anpressplatte 15 in axialer Richtung A der Reibungskupplung 7 wirkende Ausrückkraftkomponente verringert wird.

Ferner betreffen die vorangegangenen Ausführungsbeispiele eine Reibungskupplung 7 für einen Antriebsstrang 1 eines Kraftfahrzeugs, insbesondere nach einem der vorangegangenen Ausführungsbeispiele, aufweisend zumindest ein Kupplungsgehäuse 13, eine Gegendruckplatte 14 und eine Anpressplatte 15, die bezüglich zumindest der Gegendruckplatte 14 in axialer Richtung A der Reibungskupplung 7 begrenzt verlagerbar ist, und die mittels in Umfangsrichtung U der Reibungskupplung 7 verteilt angeordneter, eine Ausrückkraftkomponente aufbringender Blattfedern 19 am Kupplungsgehäuse 13 und/oder an der Gegendruckplatte 14 drehfest angebunden ist, und ferner aufweisend zumindest eine Kupplungsscheibe 16, die im eingerückten Zustand der Reibungskupplung 7 reibschlüssig zwischen der Gegendruckplatte 14 und der Anpressplatte 15, auf die zusätzlich eine durch die Betätigungseinrichtung 23 aufgebrachte Einrückkraftkomponente wirkt, geklemmt ist, wobei, wenn die Reibungskupplung derart orientiert ist, dass die Gegendruckplatte 14 unten ist, die Kupplungsscheibe 16 darüber angeordnet ist und die Anpressplatte 15 darüber angeordnet ist, die Blattfedern 19 zwischen dem Kupplungsgehäuse 13 und der Anpressplatte 15 und/oder zwischen der Gegendruckplatte 14 und der Anpressplatte 15, in Blickrichtung von einem Außenbereich der Reibungskupplung 7 zur Drehachse D der Reibungskupplung 7 betrachtet, von links oben nach rechts unten abfallend angeordnet sind.

### Bezugszeichenliste

- 1: Antriebsstrang
- 2: Verbrennungsmotor
- 3: Motorwelle
- 4: Vorderseite
- 5: Rückseite
- 6: Torsionsschwingungsdämpfer
- 7: Reibungskupplung
- 8: Eingangsseite
- 9: Ausgangsseite
- 10: Getriebe
- 11: Eingangswelle
- 12: Rad
- 13: Kupplungsgehäuse
- 14: Gegendruckplatte
- 15: Anpressplatte
- 16: Kupplungsscheibe
- 17: gegendruckplattenseitiger Reibbelag
- 18: anpressplattenseitiger Reibbelag
- 19: Blattfeder
- 20: Anpressplattenlappen
- 21: erster Befestigungspunkt
- 22: zweiter Befestigungspunkt
- 23: Betätigungseinrichtung
- 24: Tellerfeder
- 25: Schwenklagerung
- A: axiale Richtung
- D: Drehachse
- N: Neigungswinkel
- R: radiale Richtung
- T: Drehrichtung
- U: Umfangsrichtung

## Patentansprüche

1. Antriebsstrang (1) für ein Kraftfahrzeug, mit zumindest einem Verbrennungsmotor (2), der ausgebildet ist, eine Motorwelle (3) in einer einzigen Drehrichtung (T) anzutreiben, und einer Reibungskupplung (7), deren Eingangsseite (8) mittelbar oder unmittelbar mit der Motorwelle (3) verbunden ist, und deren Ausgangsseite (9) mittelbar oder unmittelbar mit einer Eingangswelle (11) eines Getriebes (10) verbunden ist, wobei die Eingangsseite (8) der Reibungskupplung (7) zumindest ein Kupplungsgehäuse (13), eine Gegendruckplatte (14) und eine Anpressplatte (15), die bezüglich zumindest der Gegendruckplatte (14) in axialer Richtung (A) der Reibungskupplung (7) begrenzt verlagerbar ist, und die mittels in Umfangsrichtung (U) der Reibungskupplung (7) verteilt angeordneter, eine Ausrückkraftkomponente aufbringender Blattfedern (19) an der Gegendruckplatte (14) drehfest angebunden ist, und wobei die Ausgangsseite (9) der Reibungskupplung (7) zumindest eine Kupplungsscheibe (16) aufweist, die im eingerückten Zustand der Reibungskupplung (7) reibschlüssig zwischen der Gegendruckplatte (14) und der Anpressplatte (15), auf die zusätzlich eine durch eine Betätigungseinrichtung (23) aufgebrachte Einrückkraftkomponente wirkt, geklemmt ist, **dadurch gekennzeichnet, dass** die Blattfedern (19) derart zwischen der Gegendruckplatte (14) und der Anpressplatte (15) angeordnet sind, dass sie im eingerückten Zustand in Drehrichtung (T) der antreibenden Motorwelle (3) eine weitere Einrückkraftkomponente erzeugen, durch die die auf die Anpressplatte (15) in axialer Richtung (A) der Reibungskupplung (7) wirkende Ausrückkraftkomponente verringert wird, wobei die Blattfedern (19), in Blickrichtung von der Gegendruckplatte (14) zur Anpressplatte (15) der Reibungskupplung (7) betrachtet, in Drehrichtung (T) der Motorwelle (3) abfallend geneigt sind, wobei zumindest im eingerückten Zustand der Reibungskupplung (7) ein Befestigungspunkt (21) einer der Blattfedern (19) an der Anpressplatte (15) in axialer Richtung (A) der Reibungskupplung (7) weiter von der Gegendruckplatte (14) entfernt ist als ein in Drehrichtung (T) der Motorwelle (3) nachfolgender Befestigungspunkt (22) derselben Blattfeder (19) an der Gegendruckplatte (14).

2. Antriebsstrang (1) nach Anspruch 1, wobei der Verbrennungsmotor (2) eine Vorderseite (4) und eine Rückseite (5), die näher an der Reibungskupplung (7) angeordnet ist, aufweist, und die Motorwelle (3), in Blickrichtung von der Vorderseite (4) zur Rückseite (5) des Verbrennungsmotors (2) betrachtet, rechtsdrehend ist.

3. Antriebsstrang (1) nach Anspruch 1 oder 2, wobei die in Umfangsrichtung (U) der Reibungskupplung (7) verteilt angeordneten Blattfedern (19) paketweise ausgebildet sind.

4. Antriebsstrang (1) nach einem der Ansprüche 1 bis 3, wobei die Reibungskupplung (7) als trockene Tellerfederkupplung ausgebildet ist.

5. Antriebsstrang (1) nach einem der Ansprüche 1 bis 4, wobei, wenn die Reibungskupplung (7) derart orientiert ist, dass die Gegendruckplatte (14) unten ist, die Kupplungsscheibe (16) darüber angeordnet ist und die Anpressplatte (15) darüber angeordnet ist, jede der Blattfedern (19) zwischen der Gegendruckplatte (14) und der Anpressplatte (15), in Blickrichtung von einem Außenbereich der Reibungskupplung (7) zur Drehachse (D) der Reibungskupplung (7) betrachtet, zumindest im eingerückten Zustand der Reibungskupplung (7) links oben an der Anpressplatte (15) und rechts unten an der Gegendruckplatte (14) befestigt ist und von links oben nach rechts unten abfallend angeordnet ist.

6. Antriebsstrang (1) nach einem der Ansprüche 1 bis 5, wobei die Kupplungsscheibe (16) zumindest einen gegendruckplattenseitigen Reibbelag (17) und zumindest einen anpressplattenseitigen Reibbelag (18) aufweist, und wobei der anpressplattenseitige Reibbelag (18) einen höheren Reibwert als der gegendruckplattenseitige Reibbelag (17) aufweist.

## Claims

1. A powertrain (1) for a motor vehicle, having at least one internal combustion engine (2), which is designed to drive an engine shaft (3) in a single direction of rotation (T), and a friction clutch (7), the input side (8) of which is directly or indirectly connected to the engine shaft (3), and the output side (9) of which is directly or indirectly connected to an input shaft (11) of a gearbox (10), wherein the input side (8) of the friction clutch (7) has at least one clutch housing (13), a counter-pressure plate (14) and a pressure plate (15), which can be displaced to a limited extent in the axial direction (A) of the friction clutch (7) with respect to at least the counter-pressure plate (14), and which is connected in a rotationally fixed manner to the counter-pressure plate (14) by means of leaf springs (19) which are distributed in the circumferential direction (U) of the friction clutch (7) and which exert disengagement force components, and wherein the output side (9) of the friction clutch (7) has at least one clutch disc (16) which, in the engaged state of the friction clutch (7), is frictionally clamped between the counter-pressure plate (14) and the pressure plate (15), on which an engagement force component exerted by an actuating device (23) additionally acts, **characterised in that** the leaf springs (19) are arranged between the counter-pressure plate (14) and the pressure plate (15) such that in the engaged state they generate a further engagement force component in the direction of rotation (T) of the driving engine shaft (3), by means of which the disengagement force component acting on the pressure plate (15) in the axial direction (A) of the friction clutch (7) is reduced, wherein the leaf springs (19) are inclined downwards in the direction of rotation (T) of the engine shaft (3), when viewed from the counter-pressure plate (14) to the pressure plate (15) of the friction clutch (7), wherein at least in the engaged state of the friction clutch (7) an attachment point (21) of one of the leaf springs (19) on the pressure plate (15) in the axial direction (A) of the friction clutch (7) is further away from the counter-pressure plate (14) than a subsequent attachment point (22) of the same leaf spring (19) on the counter-pressure plate (14) in the direction of rotation (T) of the engine shaft (3).

2. The powertrain (1) according to claim 1, wherein the internal combustion engine (2) has a front side (4) and a rear side (5), which is disposed closer to the friction clutch (7), and the engine shaft (3) rotates clockwise when viewed from the front side (4) to the rear side (5) of the internal combustion engine (2).

3. The powertrain (1) according to claim 1 or claim 2, wherein the leaf springs (19) which are distributed in the circumferential direction (U) of the friction clutch (7) are formed in packets.

4. The powertrain (1) according to any one of claims 1 to 3, wherein the friction clutch (7) is formed as a dry diaphragm clutch.

5. The powertrain (1) according to any one of claims 1 to 4, wherein when the friction clutch (7) is oriented such that the counter-pressure plate (14) is at the bottom, the clutch disc (16) is arranged there above and the pressure plate (15) is arranged there above, all of the leaf springs (19) between the counter-pressure plate (14) and the pressure plate (15) are attached to the pressure plate (15) at the top left and to the counter-pressure plate (14) at the bottom right, when viewed from an outer region of the friction clutch (7) to the axis of rotation (D) of the friction clutch (7), at least in the engaged state of the friction clutch (7), and they are arranged such that they are inclined downwards from top left to bottom right.

6. The powertrain (1) according to any one of claims 1 to 5, wherein the clutch disc (16) has at least one friction lining (17) on the counter-pressure plate side and at least one friction lining (18) on the pressure plate side, and wherein the friction lining (18) on the pressure plate side has a higher coefficient of friction than the friction lining (17) on the counter-pressure plate side.

## Revendications

1. Chaîne cinématique (1) pour un véhicule à moteur comprenant au moins un moteur à combustion interne (2), laquelle conçue pour entraîner un arbre moteur (3) dans un seul sens de rotation (T), et un embrayage à friction (7), dont une face entrée (8) est raccordée, directement ou indirectement, à l'arbre moteur (3), et dont une face sortie (9) est raccordée, directement ou indirectement, à un arbre d'entrée (11) d'une boîte de vitesses (10), dans laquelle la face entrée (8) de l'embrayage à friction (7) comporte au moins un carter d'embrayage (13), une plaque de contre-pression (14) et une plaque de pression (15), laquelle, par rapport à l'au moins la plaque de contre-pression (14), peut être déplacée de manière limitée dans un sens axial (A) de l'embrayage à friction (7), et laquelle, au moyen des ressorts à lames (19) répartis dans un sens périphérique (U) de l'embrayage à friction (7), fournissant une composante de force de débrayage, est reliée de manière solidaire en rotation à la plaque de contre-pression (14), et dans laquelle la face sortie (9) de l'embrayage à friction (7) comporte au moins un disque d'embrayage (16), lequel, dans un état embrayé de l'embrayage à friction (7), est serré par friction entre la plaque de contre-pression (14) et la plaque de pression (15), sur laquelle s'exerce également une composante de force d'embrayage appliquée à l'aide d'un dispositif d'actionnement (23), **caractérisée en ce que** les ressorts à lames (19) sont disposés entre la plaque de contre-pression (14) et la plaque de pression (15) de telle sorte qu'elles génèrent, dans l'état embrayé, dans le sens de rotation (T) de l'arbre moteur (3) entraînant, une autre composante de force d'embrayage, au moyen de laquelle la composante de force de débrayage s'exerçant sur la plaque de pression (15) dans le sens axial (A) de l'embrayage à friction (7) est réduite, dans laquelle les ressorts à lames (19), vus dans un sens d'observation de la plaque de contre-pression (14) vers la plaque de pression (15) de l'embrayage à friction (7), sont inclinés vers le bas dans le sens de rotation (T) de l'arbre du moteur (3), dans laquelle, au moins dans l'état embrayé de l'embrayage à friction (7), un point de fixation (21) de l'un des ressorts à lames (19) sur la plaque de pression (1 5) est plus éloigné, dans le sens axial (A) de l'embrayage à friction (7), de la plaque de contre-pression (14) qu'un point de fixation (22) suivant, dans le sens de rotation (T) de l'arbre du moteur (3), du même ressort à lame (19) sur la plaque de contre-pression (14).

2. Chaîne cinématique (1) selon la revendication 1, dans laquelle le moteur à combustion interne (2) comporte une face avant (4) et une face arrière (5), laquelle est plus proche de l'embrayage à friction (7) et l'arbre moteur (3), vu dans un sens d'observation de la face avant (4) vers la face arrière (5) du moteur à combustion interne (2) vu, tourne à droite.

3. Chaîne cinématique (1) selon la revendication 1 ou 2, dans laquelle les ressorts à lames (19) répartis dans le sens périphérique (U) de l'embrayage à friction (7) sont conçus sous la forme de paquets.

4. Chaîne cinématique (1) selon l'une quelconque des revendications 1 à 3, dans laquelle l'embrayage à friction (7) est conçu sous la forme d'embrayage à diaphragme.

5. Chaîne cinématique (1) selon l'une quelconque des revendications 1 à 4, dans laquelle, lorsque l'embrayage à friction (7) est orienté de telle sorte que la plaque de contre-pression (14) est en dessous, le disque d'embrayage (16) est disposé au-dessus et la plaque de pression (15) est disposé au-dessus, chacun des ressorts à lames (19) entre la plaque de contre-pression (14) et la plaque de pression (15), vu dans un sens d'observation d'une zone extérieure de l'embrayage à friction (7) vers l'axe de rotation (D) de l'embrayage à friction (7), au moins dans l'état embrayé de l'embrayage à friction (7), est fixé en haut à gauche à la plaque de pression (15) et en bas à droite à la plaque de contre-pression (14) et est disposé de manière inclinée vers le bas d'en haut à gauche vers le bas à droite.

6. Chaîne cinématique (1) selon l'une quelconque des revendications 1 à 5, dans laquelle le disque d'embrayage (16) comporte au moins une garniture de friction (17) côté plaque de contre-pression et au moins une garniture de friction (18) côté plaque de pression, et dans laquelle la garniture de friction (18) côté plaque de pression présente un coefficient de frottement supérieur à un un coefficient de frottement de la garniture de friction (17) côté plaque de contre-pression.
